# FASCICULE DE BREVET EUROPEEN

(11) **EP 3 020 586 B1**
(45) Date de publication et mention de la délivrance du brevet: **08.04.2020**
(21) Numéro de dépôt: 15193358.7
(22) Date de dépôt: 06.11.2015
(51) Int. Cl.: B60J 5/04

(54) **FIXATION RÉVERSIBLE D'UN PANNEAU EXTÉRIEUR INTERCHANGEABLE D'UN OUVRANT SUR UN CAISSON PAR AGRAFES TIRÉES PAR UNE SANGLE MONTÉE SUR LE CAISSON ET MISE EN TENSION**
REVERSIBLE BEFESTIGUNG EINES ÄUSSEREN AUSTAUSCHBAREN PANEELS FÜR ÖFFNUNGSELEMENT AUF EINEM GEHÄUSE MITHILFE VON KLAMMERN, DIE MIT EINEM AUF DEM GEHÄUSE MONTIERTEN GURT FESTGEZOGEN UND GESPANNT WERDEN
REVERSIBLE ATTACHMENT OF AN INTERCHANGEABLE EXTERNAL PANEL OF AN OPENABLE SECTION OF A CABINET BY CLIPS PULLED BY A STRAP MOUNTED ON THE CABINET AND PLACED UNDER TENSION

(30) Priorité: 13.11.2014 FR 1460949
(43) Date de publication de la demande: 18.05.2016
(73) Titulaire: Renault S.A.S., 92100 Boulogne-Billancourt (FR)
(72) Inventeur: HEWAK, Gregor, 95490 VAUREAL (FR); BEZEAULT, Loic, 78150 LE CHESNAY (FR); CHEVALIER, Maxime, 78960 Voisins Le Bretonneux (FR)

(56) Documents cités:
- EP-A2- 0 739 769
- FR-A1- 2 236 678
- GB-A- 2 378 727
- US-A- 6 095 594

## Description

### Domaine technique de l'invention

L'invention concerne un ouvrant de véhicule automobile, notamment une porte latérale pour véhicule automobile, comprenant un caisson structurel de support, au moins un panneau extérieur interchangeable et des éléments de fixation réversible pour fixer d'une manière démontable le panneau extérieur sur une face extérieure du caisson.

L'invention a pour objet également un véhicule automobile, comprenant au moins un tel ouvrant, notamment constituant une porte latérale pour véhicule automobile avant ou arrière, gauche ou droite. Elle concerne aussi un procédé d'assemblage d'un ouvrant de véhicule automobile et un kit de personnalisation pour ouvrant de véhicule automobile.

### État de la technique

Il est possible de faire en sorte de disposer d'une pluralité de panneaux extérieurs interchangeables de formes différentes entre eux et/ou de couleurs différentes entre eux et/ou ayant des décors notamment par sérigraphie différents entre eux, ayant chacun une interface de montage commune à un même caisson structurel de support commun à ces différents panneaux extérieurs interchangeables. Le document US6095594-A décrit un panneau extérieur de protection de bas de porte interchangeable et monté sur un panneau extérieur de carrosserie.

Pour que la solution soit conviviale, il est nécessaire que le changement de carrosserie soit le moins onéreux possible, incluant le coût des pièces ainsi que le coût de main d'œuvre. Il en résulte un besoin de minimisation de ces coûts en tant que tels mais aussi que ce soit dans le cadre d'un montage en usine ou dans le cadre d'une prestation en service après-vente.

A ce jour, ces problématiques ne sont pas résolues. Dans le cas particulier d'une porte latérale, pour déposer un panneau extérieur, il est actuellement nécessaire de démonter l'intégralité des moyens de fixation du panneau extérieur sur le caisson structurel de support, comme cela est décrit dans le document EP0739769-A2. Cette opération est longue et fastidieuse, la rendant onéreuse en coût de main d'œuvre et peu conviviale au final.

### Objet de l'invention

Le but de la présente invention est de proposer un ouvrant de véhicule automobile et un procédé d'assemblage qui remédient aux inconvénients listés ci-dessus.

Ce but peut être atteint notamment par la fourniture d'un ouvrant de véhicule automobile, notamment une porte latérale pour véhicule automobile, comprenant un caisson structurel de support, au moins un panneau extérieur interchangeable et des éléments de fixation réversible pour fixer d'une manière démontable le panneau extérieur sur une face extérieure du caisson, les éléments de fixation réversible comprenant :
- une pluralité d'agrafes solidaires du panneau configurées de sorte à traverser le caisson et faire saillie d'une première face du caisson opposée à une deuxième face en contact avec le panneau, lorsque le panneau est positionné sur le caisson dans la position à maintenir par les éléments de fixation réversible,
- au moins une sangle montée sur le caisson et s'enfilant dans les agrafes dans un sens allant de la deuxième face vers la première face du caisson,
- un dispositif de serrage apte à placer la sangle dans une première configuration dans laquelle la sangle est mise en tension par le dispositif de serrage et exerce une traction sur les agrafes pour serrer le panneau sur le caisson.

Selon un mode de réalisation particulier, le dispositif de serrage est configuré de sorte à faire varier la sangle entre ladite première configuration et une deuxième configuration dans laquelle le dispositif de serrage desserre la sangle et supprime ladite mise en tension de la sangle et de ladite traction sur les agrafes.

Les agrafes peuvent présenter une élasticité leur permettant de remplir une fonction de ressort et de plaquer le caisson contre le panneau dans la première configuration du dispositif de serrage.

Selon un mode de réalisation particulier, les agrafes sont maintenues par un adhésif sur une première face du panneau opposée à une deuxième face du panneau venant en contact avec le caisson.

Les agrafes peuvent traverser l'épaisseur du panneau à travers des lumières correspondantes ménagées dans le panneau dans lesquelles les agrafes sont montées.

Le dispositif de serrage peut comprendre une accroche, notamment de type genouillère, solidaire du caisson et permettant l'accrochage d'une première extrémité de la sangle.

Selon un mode de réalisation particulier, l'accroche comprend une embase fixée au caisson et un levier sur lequel est accrochée la première extrémité de la sangle, le levier variant de positions angulaires par pivotement par rapport à l'embase entre des première et deuxième positions angulaires distinctes.

L'embase peut comprendre une première zone de montage à pivotement du levier, dans laquelle la variation angulaire du levier entre les première et deuxième positions angulaires assure la variation de configurations du dispositif de serrage et une deuxième zone de montage à pivotement du levier, distincte de la première zone.

Lorsque le levier est monté sur l'embase au niveau de la deuxième zone de montage à pivotement, la variation angulaire du levier entre les première et deuxième positions angulaires peut assurer un déblocage de la sangle par rapport aux agrafes.

L'ouvrant de véhicule automobile peut comprendre des éléments de fixation d'une deuxième extrémité de la sangle sur le caisson, notamment par vissage.

Un véhicule automobile pourra comprendre au moins un tel ouvrant, notamment constituant une porte latérale pour véhicule automobile avant ou arrière, gauche ou droite.

Un procédé d'assemblage d'un tel ouvrant de véhicule automobile, notamment d'une telle porte latérale pour véhicule automobile, peut comprendre une étape de fixation réversible dudit au moins un panneau extérieur interchangeable sur la face extérieure du caisson structurel de support comprenant les étapes successives suivantes :
- une première étape de mise en place du panneau sur le caisson dans la position à maintenir par les éléments de fixation réversible, durant laquelle les agrafes viennent traverser le caisson et faire saillie de la première face du caisson,
- une deuxième étape durant laquelle la sangle est enfilée dans les agrafes,
- une troisième étape d'actionnement du dispositif de serrage vers sa première configuration durant laquelle la sangle est mise en tension par le dispositif de serrage et exerce une traction sur les agrafes pour serrer le panneau sur le caisson.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un exemple d'ouvrant selon l'invention, vu d'un côté intérieur,
- la figure 2 est une vue du détail A de la figure 1,
- la figure 3 est une vue en coupe transversale de l'ouvrant au niveau de l'une des agrafes,
- et les figures 4 et 5 représentent de côté le dispositif de serrage lorsque le levier est respectivement dans la première et dans la deuxième zone de montage à pivotement relativement à l'embase.

### Description de modes préférentiels de l'invention

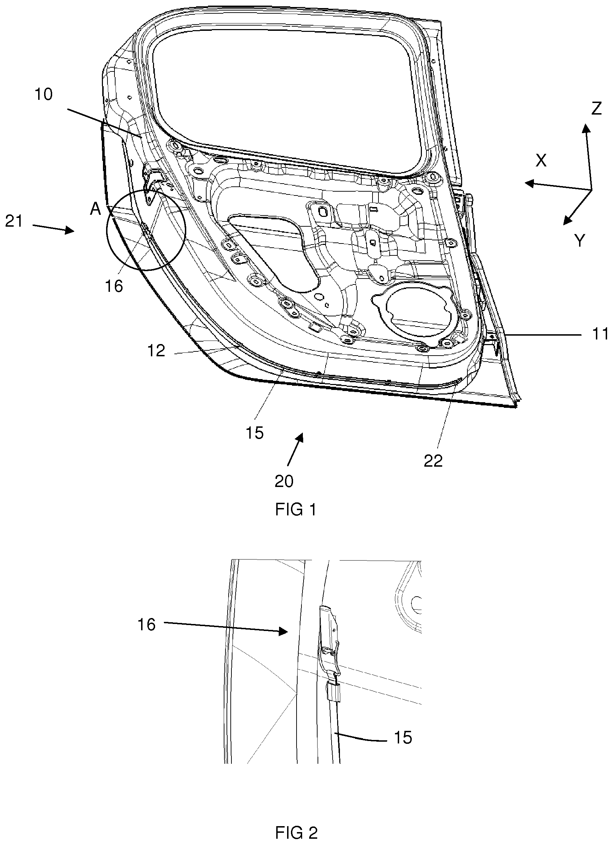

L'invention qui va maintenant être décrite, en référence aux figures 1 à 5, concerne de manière générale un ouvrant de véhicule automobile, comprenant un caisson structurel de support 10, au moins un panneau extérieur interchangeable 11 et des éléments de fixation réversible détaillés plus loin pour fixer d'une manière démontable le panneau extérieur 11 sur une face extérieure du caisson 10. Il peut notamment s'agir d'un ouvrant constitutif d'une porte latérale pour véhicule automobile. Dans le présent texte, on entend par « face extérieure » la face qui est tournée du côté extérieur, c'est-à-dire du côté latéral correspondant du véhicule, par opposition à la « face intérieure » qui est tournée vers l'intérieur du véhicule. Ainsi le panneau extérieur 11 vient recouvrir le caisson 10 en étant accolé à la face extérieure de ce dernier.

L'invention a pour objet également un véhicule automobile en tant que tel, comprenant au moins un tel ouvrant, notamment constituant une porte latérale pour véhicule automobile avant ou arrière, gauche ou droite. Elle concerne aussi un procédé d'assemblage d'un ouvrant de véhicule automobile et un kit de personnalisation pour ouvrant de véhicule automobile détaillés plus loin.

L'invention va être décrite à l'appui des figures 1 à 5 dans le cas particulier, en aucun cas limitatif, d'un ouvrant constitutif d'une porte latérale pour véhicule automobile. Il peut s'agir d'une porte latérale droite ou gauche, avant ou arrière. Toutefois, l'invention peut aussi s'appliquer à un ouvrant constitutif d'un capot avant destiné à la fermeture d'un compartiment moteur du véhicule automobile ou à l'inverse constitutif d'un hayon arrière pour véhicule automobile.

Pour une meilleure compréhension, il est associé à la porte latérale un repère orthogonal (figure 1), dans lequel X désigne la direction longitudinale avant-arrière du véhicule, orientée vers l'arrière, Y la direction transversale du véhicule, orientée vers la droite, et Z la direction verticale, orientée vers le haut.

Le terme « interchangeable » associé au panneau extérieur 11 correspond dans ce document à la notion d'une fixation démontable et réversible du panneau extérieur 11, en ce sens qu'il peut être retiré à souhait par l'utilisateur, au montage ou en après-vente, en fonction de caractéristiques propres au panneau extérieur 11 et sélectionnées par l'utilisateur, telles que la forme, la couleur ou un éventuel décor esthétique.

Les éléments de fixation réversible comprennent une pluralité d'agrafes 12 solidaires du panneau 11 et configurées de sorte à traverser le caisson 10 et faire saillie d'une première face 13 du caisson 10 opposée à une deuxième face 14 en contact avec le panneau 11, lorsque le panneau 11 est positionné sur le caisson 10 dans la position à maintenir par les éléments de fixation réversible.

Les éléments de fixation réversible comprennent aussi au moins une sangle 15 montée sur le caisson 10 et s'enfilant dans les agrafes 12 dans un sens allant de la deuxième face 14 vers la première face 13 du caisson 10. Selon le mode de réalisation particulier illustré, la sangle 15 s'étend sur tout ou partie du bord inférieur 20 de l'ouvrant vu selon la direction Z et sur tout ou partie du bord latéral arrière 21 de l'ouvrant vu selon la direction Z. Elle s'étend notamment sur la tranche du caisson 10, vue selon la direction Y.

Les éléments de fixation réversible comprennent également un dispositif de serrage 16 apte à placer la sangle 15 dans une première configuration dans laquelle la sangle 15 est mise en tension par le dispositif de serrage 16 et exerce une traction sur les agrafes 12 pour serrer le panneau 11 sur le caisson 10. Selon le mode de réalisation particulier illustré, le dispositif de serrage est implanté sur le bord latéral arrière 21 de l'ouvrant, sensiblement à mi hauteur vu selon la direction Z (figures 1 et 2).

Selon un mode de réalisation particulier, le dispositif de serrage 16 est configuré de sorte à faire varier la sangle 15 entre la première configuration et une deuxième configuration dans laquelle le dispositif de serrage 16 desserre la sangle 15 et supprime la mise en tension de la sangle 15 et de la traction sur les agrafes 12 préalablement exercée dans la première configuration.

De préférence, les agrafes 12 présentent une élasticité leur permettant de remplir une fonction de ressort et de plaquer le caisson 10 contre le panneau 11 dans la première configuration du dispositif de serrage 16.

Selon un mode de réalisation particulier présentant l'avantage de son efficacité et de sa simplicité, les agrafes 12 sont maintenues par un adhésif 23 sur une première face 17 du panneau 11 opposée à une deuxième face 18 du panneau 11 venant en contact avec le caisson 10. Il va de soi que la nature de la fixation des agrafes 12 sur le panneau 11 peut être différente, par exemple par encliquetage ou équivalent.

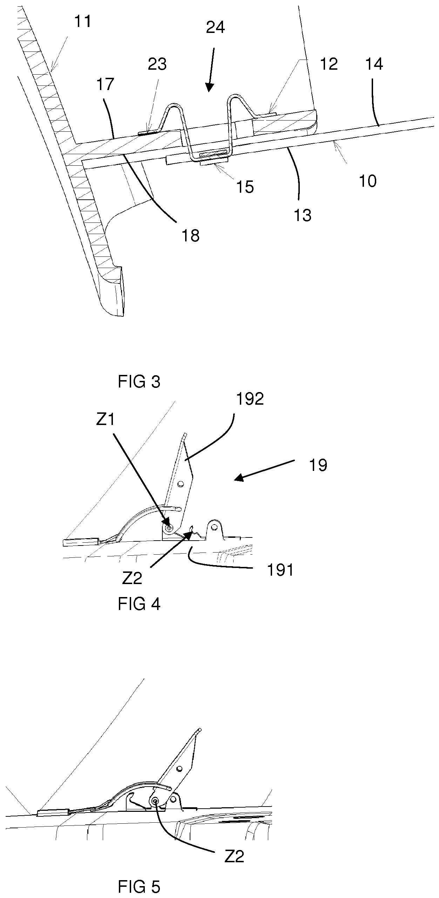

Comme cela est visible sur la figure 3 par exemple, les agrafes 12 traversent l'épaisseur du panneau 11 à travers des lumières 24 correspondantes ménagées dans le panneau 11 et dans lesquelles les agrafes 12 sont montées. L'adhésif 23 peut être disposé sur le panneau 11 en bordure de la lumière 24 afin d'assurer la fixation de l'agrafe 12.

En référence maintenant aux figures 4 et 5, bien que la nature du dispositif de serrage 16 puisse être quelconque dès lors qu'il répond à la fonction générale énoncée précédemment, le dispositif de serrage 16 peut comprend une accroche 19, notamment de type genouillère, solidaire du caisson 10 et permettant l'accrochage d'une première extrémité de la sangle 15. Cette variante est particulièrement adaptée au cas de figure envisageable d'une sangle 15 présentant une certaine élasticité, par exemple étant formée dans un matériau textile ou à base de caoutchouc.

Selon un mode de réalisation particulier non limitatif, l'accroche 19 comprend une embase 191 fixée par toute technique connue au caisson 10 et un levier 192 sur lequel est accrochée la première extrémité de la sangle 15. Le levier 192 est monté sur l'embase 191 de sorte à varier de positions angulaires par pivotement par rapport à l'embase 191 entre des première et deuxième positions angulaires distinctes. Entre autres, la variation du levier 192 entre les première et deuxième positions angulaires est destinée à assurer, en pratique, la variation du dispositif de serrage 16 entre les première et deuxième configurations, respectivement.

Plus précisément, selon le mode de réalisation particulier qui est illustré, l'embase 191 comprend :
- une première zone Z1 de montage à pivotement du levier 192, dans laquelle la variation angulaire du levier 192 entre les première et deuxième positions angulaires assure la variation de configurations du dispositif de serrage 16, notamment entre les première et deuxième configurations respectivement,
- et une deuxième zone Z2 de montage à pivotement du levier 192, distincte de la première zone Z1.

Sur la figure 4, le levier 192 est monté sur l'embase 191 au niveau de la première zone Z1 de montage à pivotement et occupe sa deuxième position angulaire, correspondant à la deuxième configuration du dispositif de serrage 16. Un pivotement du levier 192 vers la droite, jusqu'à atteindre la première position angulaire (représentée sur la figure 2), permet le passage du dispositif de serrage 16 vers sa première configuration dans laquelle la sangle 15 est mise en tension par le dispositif de serrage 16 et exerce une traction sur les agrafes 12 pour serrer le panneau 11 sur le caisson 10.

En référence à la figure 5, lorsque le levier 192 est monté sur l'embase 191 au niveau de la deuxième zone Z2 de montage à pivotement, la variation angulaire du levier 192 entre les première et deuxième positions angulaires assure un déblocage de la sangle 15 par rapport aux agrafes 12, ce blocage étant notamment susceptible d'apparaitre dans la première configuration du dispositif de serrage 16. Sur la figure 5, le levier 192 occupe une position angulaire intermédiaire entre ses première et deuxième positions angulaires.

L'ouvrant de véhicule automobile peut comprendre des éléments de fixation 22 d'une deuxième extrémité de la sangle 15 sur le caisson 10, notamment par vissage. La deuxième extrémité de la sangle 15, qui est opposée à la première extrémité mentionnée plus haut, est notamment située à proximité de l'extrémité avant, vu selon la direction X, du bord inférieur 20.

Alternativement, selon un mode de réalisation non illustré présentant l'avantage d'un coût inférieur, la sangle 15 peut être fixée au niveau de sa première extrémité à une poignée elle-même fixée sur le caisson 10, par exemple par vissage. Sa deuxième extrémité peut être fixée au caisson 10 par l'intermédiaire d'un excentrique, permettant un serrage progressif de la sangle. Cette variante est notamment adaptée dans le cas de figure envisageable où la sangle 15 est très rigide, par exemple formée dans un acier, ce qui nécessite un déplacement de la sangle 15 nettement inférieur au cas de figure d'une sangle 15 élastique.

L'utilisation de l'ouvrant pour véhicule automobile peut correspondre à la mise en œuvre des étapes décrites ci-après.

Le procédé d'assemblage de l'ouvrant de véhicule automobile, notamment d'une telle porte latérale pour véhicule automobile, comprend une étape de fixation réversible dudit au moins un panneau extérieur interchangeable 11 sur la face extérieure du caisson structurel de support 10 comprenant les étapes successives suivantes :
- une première étape de mise en place du panneau 11 sur le caisson 10 dans la position à maintenir par les éléments de fixation réversible, durant laquelle les agrafes 12 viennent traverser le caisson 10 et faire saillie de la première face 13 du caisson 10,
- une deuxième étape durant laquelle la sangle 15 est enfilée dans les agrafes 12,
- une troisième étape d'actionnement du dispositif de serrage 16 vers sa première configuration durant laquelle la sangle 15 est mise en tension par le dispositif de serrage 16 et exerce une traction sur les agrafes 12 pour serrer le panneau 11 sur le caisson 10.

La deuxième étape précédente peut notamment comprendre une étape de fixation, notamment par vissage, de la deuxième extrémité de la sangle 15 sur le caisson 10, et une étape d'accrochage de la première extrémité de la sangle 15 sur l'accroche 19 du dispositif de serrage 16.

Durant la troisième étape précédente, le levier 192 est monté sur l'embase 191 au niveau de la première zone Z1 et elle résulte du passage du levier 192 de la deuxième position angulaire à sa première position angulaire.

Le procédé de démontage de l'ouvrant peut ensuite comprendre une étape de désolidarisation de la deuxième extrémité de la sangle 15, puis une étape de passage du levier 192 de la première zone Z1 à la deuxième zone Z2, puis une étape de passage du levier 192 vers sa première position angulaire afin de tirer sur la sangle 15 pour la débloquer par rapport aux agrafes 12 et la libérer complètement.

Le kit de personnalisation pour ouvrant de véhicule automobile comprendra une pluralité de panneaux extérieurs interchangeables 11 de formes différentes entre eux et/ou de couleurs différentes entre eux et/ou ayant des décors notamment par sérigraphie différents entre eux, ayant chacun une interface de montage commune à un même caisson structurel de support 10 commun à cette pluralité de panneaux extérieurs interchangeables 11. Un tel kit de personnalisation est notamment adapté à une porte latérale pour véhicule automobile telle que décrite précédemment.

La solution d'assemblage décrite précédemment permet de réduire le nombre de vis nécessaires par rapport aux solutions existantes. De manière plus générale, le nombre de pièces nécessaires à la réalisation de cette solution est faible. Elle est donc peu coûteuse. L'opération de changement d'un panneau extérieur interchangeable 11 est beaucoup plus rapide et simple que dans les solutions actuelles.

## Revendications

1. Ouvrant de véhicule automobile, notamment porte latérale pour véhicule automobile, comprenant un caisson structurel de support (10), au moins un panneau extérieur interchangeable (11) et des éléments de fixation réversible pour fixer d'une manière démontable le panneau extérieur (11) sur une face extérieure du caisson (10), **caractérisé en ce que** les éléments de fixation réversible comprennent :
- une pluralité d'agrafes (12) solidaires du panneau (11) configurées de sorte à traverser le caisson (10) et faire saillie d'une première face (13) du caisson (10) opposée à une deuxième face (14) en contact avec le panneau (11), lorsque le panneau (11) est positionné sur le caisson (10) dans la position à maintenir par les éléments de fixation réversible,
- au moins une sangle (15) montée sur le caisson (10) et s'enfilant dans les agrafes (12) dans un sens allant de la deuxième face (14) vers la première face (13) du caisson (10),
- un dispositif de serrage (16) apte à placer la sangle (15) dans une première configuration dans laquelle la sangle (15) est mise en tension par le dispositif de serrage (16) et exerce une traction sur les agrafes (12) pour serrer le panneau (11) sur le caisson (10).

2. Ouvrant de véhicule automobile selon la revendication 1, **caractérisé en ce que** le dispositif de serrage (16) est configuré de sorte à faire varier la sangle (15) entre ladite première configuration et une deuxième configuration dans laquelle le dispositif de serrage (16) desserre la sangle (15) et supprime ladite mise en tension de la sangle (15) et de ladite traction sur les agrafes (12).

3. Ouvrant de véhicule automobile selon l'une quelconque des revendications 1 ou 2, **caractérisé en ce que** les agrafes (12) présentent une élasticité leur permettant de remplir une fonction de ressort et de plaquer le caisson (10) contre le panneau (11) dans la première configuration du dispositif de serrage (16).

4. Ouvrant de véhicule automobile selon l'une quelconque des revendications 1 à 3, **caractérisé en ce que** les agrafes (12) sont maintenues par un adhésif (23) sur une première face (17) du panneau (11) opposée à une deuxième face (18) du panneau (11) venant en contact avec le caisson (10).

5. Ouvrant de véhicule automobile selon l'une quelconque des revendications 1 à 4, **caractérisé en ce que** les agrafes (12) traversent l'épaisseur du panneau (11) à travers des lumières (24) correspondantes ménagées dans le panneau (11) dans lesquelles les agrafes (12) sont montées.

6. Ouvrant de véhicule automobile selon l'une quelconque des revendications 1 à 5, **caractérisé en ce que** le dispositif de serrage (16) comprend une accroche (19), notamment de type genouillère, solidaire du caisson (10) et permettant l'accrochage d'une première extrémité de la sangle (15).

7. Ouvrant de véhicule automobile selon la revendication 6, **caractérisé en ce que** l'accroche (19) comprend une embase (191) fixée au caisson (10) et un levier (192) sur lequel est accrochée la première extrémité de la sangle (15), le levier (192) variant de positions angulaires par pivotement par rapport à l'embase (191) entre des première et deuxième positions angulaires distinctes.

8. Ouvrant de véhicule automobile selon la revendication 7, **caractérisé en ce que** l'embase (191) comprend une première zone (Z1) de montage à pivotement du levier (192), dans laquelle la variation angulaire du levier (192) entre les première et deuxième positions angulaires assure la variation de configurations du dispositif de serrage (16) et une deuxième zone (Z2) de montage à pivotement du levier (192), distincte de la première zone (Z1).

9. Ouvrant de véhicule automobile selon la revendication 8, **caractérisé en ce que** lorsque le levier (192) est monté sur l'embase (191) au niveau de la deuxième zone (Z2) de montage à pivotement, la variation angulaire du levier (192) entre les première et deuxième positions angulaires assure un déblocage de la sangle (15) par rapport aux agrafes (12).

10. Ouvrant de véhicule automobile selon l'une quelconque des revendications 6 à 9, **caractérisé en ce qu'**il comprend des éléments de fixation (22) d'une deuxième extrémité de la sangle (15) sur le caisson (10), notamment par vissage.

11. Véhicule automobile, comprenant au moins un ouvrant selon l'une quelconque des revendications précédentes, notamment constituant une porte latérale pour véhicule automobile avant ou arrière, gauche ou droite.

12. Procédé d'assemblage d'un ouvrant de véhicule automobile selon quelconque l'une des revendications 1 à 10, notamment d'une telle porte latérale pour véhicule automobile, comprenant une étape de fixation réversible dudit au moins un panneau extérieur interchangeable (11) sur la face extérieure du caisson structurel de support (10) comprenant les étapes successives suivantes :
- une première étape de mise en place du panneau (11) sur le caisson (10) dans la position à maintenir par les éléments de fixation réversible, durant laquelle les agrafes (12) viennent traverser le caisson (10) et faire saillie de la première face (13) du caisson (10),
- une deuxième étape durant laquelle la sangle (15) est enfilée dans les agrafes (12),
- une troisième étape d'actionnement du dispositif de serrage (16) vers sa première configuration durant laquelle la sangle (15) est mise en tension par le dispositif de serrage (16) et exerce une traction sur les agrafes (12) pour serrer le panneau (11) sur le caisson (10).

## Patentansprüche

1. Kraftfahrzeugöffnungselement, insbesondere Seitentür für ein Kraftfahrzeug, umfassend einen tragenden Rohbaukasten (10), mindestens ein austauschbares Außenpanel (11) und Elemente zur reversiblen Befestigung, um das Außenpanel (11) lösbar an einer Außenseite des Kastens (10) zu befestigen, **dadurch gekennzeichnet, dass** die Elemente zur reversiblen Befestigung umfassen:
- eine Mehrzahl von fest mit dem Panel (11) verbundenen Klammern (12), die so ausgestaltet sind, dass sie den Kasten (10) durchdringen und von einer ersten Seite (13) des Kastens (10) abstehen, die entgegengesetzt zu einer zweiten Seite (14) ist, die in Kontakt mit dem Panel (11) ist, wenn das Panel (11) an dem Kasten (10) in der von den Elementen zur reversiblen Befestigung zu haltenden Position positioniert ist,
- mindestens einen Gurt (15), der an dem Kasten (10) montiert ist und in einer von der zweiten Seite (14) zur ersten Seite (13) des Kastens (10) verlaufenden Richtung in die Klammern (12) eingefädelt wird,
- eine Spannvorrichtung (16), die geeignet ist, den Gurt (15) in eine erste Konfiguration zu platzieren, in welcher der Gurt (15) durch die Spannvorrichtung (16) gespannt wird und eine Zugkraft auf die Klammern (12) ausübt, um das Panel (11) an den Kasten (10) zu spannen.

2. Kraftfahrzeugöffnungselement nach Anspruch 1, **dadurch gekennzeichnet, dass** die Spannvorrichtung (16) dazu ausgestaltet ist, den Gurt (15) zwischen der ersten Konfiguration und einer zweiten Konfiguration, in der die Spannvorrichtung (16) den Gurt löst (15) und das Spannen des Gurts (15) und die Zugkraft an den Klammern (12) aufhebt, wechseln zu lassen.

3. Kraftfahrzeugöffnungselement nach einem der Ansprüche 1 oder 2, **dadurch gekennzeichnet, dass** die Klammern (12) eine Elastizität aufweisen, die es ihnen ermöglicht, eine Federfunktion zu erfüllen und den Kasten (10) in der ersten Konfiguration der Spannvorrichtung (16) gegen das Panel (11) zu drücken.

4. Kraftfahrzeugöffnungselement nach einem der Ansprüche 1 bis 3, **dadurch gekennzeichnet, dass** die Klammern (12) mit einem Klebstoff (23) an einer ersten Seite (17) des Panels (11) gehalten werden, die entgegengesetzt zu einer zweiten Seite (18) des Panels (11) ist, die mit dem Kasten (10) in Kontakt kommt.

5. Kraftfahrzeugöffnungselement nach einem der Ansprüche 1 bis 4, **dadurch gekennzeichnet, dass** die Klammern (12) die Dicke des Panels (11) durch entsprechende Schlitze (24) durchdringen, die in dem Panel (11) ausgebildet sind und in denen die Klammern (12) montiert werden.

6. Kraftfahrzeugöffnungselement nach einem der Ansprüche 1 bis 5, **dadurch gekennzeichnet, dass** die Spannvorrichtung (16) ein Einhängteil (19), insbesondere von der Art eines Kniehebelspanners, umfasst, das mit dem Kasten (10) fest verbunden ist und das Einhängen eines ersten Endes des Gurts (15) ermöglicht.

7. Kraftfahrzeugöffnungselement nach Anspruch 6, **dadurch gekennzeichnet, dass** das Einhängteil (19) einen am Kasten (10) befestigten Sockel (191) und einen Hebel (192) umfasst, an dem das erste Ende des Gurts (15) eingehängt ist, wobei der Hebel (192) Winkelpositionen durch Schwenken in Bezug auf den Sockel (191) zwischen ersten und zweiten unterschiedlichen Winkelpositionen ändert.

8. Kraftfahrzeugöffnungselement nach Anspruch 7, **dadurch gekennzeichnet, dass** der Sockel (191) einen ersten Bereich (Z1) zur Schwenkmontage des Hebels (192), in dem die Winkeländerung des Hebels (192) zwischen den ersten und zweiten Winkelpositionen die Änderung von Konfigurationen der Spannvorrichtung (16) gewährleistet, und einen zweiten Bereich (Z2) zur Schwenkmontage des Hebels (192), der von dem ersten Bereich (Z1) verschieden ist, umfasst.

9. Kraftfahrzeugöffnungselement nach Anspruch 8, **dadurch gekennzeichnet, dass**, wenn der Hebel (192) am Sockel (191) auf Höhe des zweiten Schwenkmontagebereichs (Z2) montiert ist, die Winkeländerung des Hebels (192) zwischen den ersten und zweiten Winkelpositionen ein Entriegeln des Gurts (15) in Bezug auf die Klammern (12) gewährleistet.

10. Kraftfahrzeugöffnungselement nach einem der Ansprüche 6 bis 9, **dadurch gekennzeichnet, dass** es Befestigungselemente (22) zum Befestigen eines zweiten Endes des Gurts (15) an dem Kasten (10) umfasst, insbesondere durch Verschrauben.

11. Kraftfahrzeug mit mindestens einem Öffnungselement nach einem der vorhergehenden Ansprüche, das insbesondere eine vordere oder hintere, linke oder rechte Seitentür für ein Kraftfahrzeug bildet.

12. Verfahren zur Montage eines Kraftfahrzeugöffnungselements nach einem der Ansprüche 1 bis 10, insbesondere einer solchen Seitentür für ein Kraftfahrzeug, umfassend einen Schritt des reversiblen Befestigens des mindestens einen austauschbaren Außenpanels (11) an der Außenseite des tragenden Rohbaukastens (10), umfassend die folgenden aufeinanderfolgenden Schritte:
- einen ersten Schritt des Platzierens des Panels (11) an dem Kasten (10) in der Position, die von den Elementen zur reversiblen Befestigung zu halten ist, während dessen die Klammern (12) den Kasten (10) durchdringen und von der ersten Seite (13) des Kastens (10) abstehen,
- einen zweiten Schritt, während dessen der Gurt (15) in die Klammern (12) eingefädelt wird,
- einen dritten Schritt des Betätigens der Spannvorrichtung (16) zu ihrer ersten Konfiguration hin, während dessen der Gurt (15) durch die Spannvorrichtung (16) gespannt wird und eine Zugkraft auf die Klammern (12) ausübt, um das Panel (11) an den Kasten (10) zu spannen.

## Claims

1. Motor vehicle openable section, particularly a side door for a motor vehicle, comprising a structural support cabinet (10), at least one interchangeable external panel (11) and reversible attachment elements for removably fixing the external panel (11) on an external face of the cabinet (10), **characterized in that** the reversible attachment elements comprise:
- a plurality of clips (12), secured to the panel (11), configured such as to traverse the cabinet (10) and to project from a first face (13) of the cabinet (10) opposite the second face (14) in contact with the panel (11) when the panel (11) is positioned on the cabinet (10) in the position to be maintained by the reversible attachment elements,
- at least one strap (15) mounted on the cabinet (10) and slipped into the clips (12) in a direction from the second face (14) towards the first face (13) of the cabinet (10),
- a tightening device (16) capable of placing the strap (15) in a first configuration, in which the strap (15) is tensioned by the tightening device (16) and pulls on the clips (12) such as to clamp the panel (11) on the cabinet (10).

2. Motor vehicle openable section according to Claim 1, **characterized in that** the tightening device (16) is configured in such a manner as to vary the strap (15) between said first configuration and a second configuration in which the tightening device (16) loosens the strap (15) and eliminates said tensioning of the strap (15) and said pull on the clips (12) .

3. Motor vehicle openable section according to either of Claims 1 or 2, **characterized in that** the clips (12) have an elasticity enabling them to fulfil a spring function and to press the cabinet (10) against the panel (11) in the first configuration of the tightening device (16).

4. Motor vehicle openable section according to any one of Claims 1 to 3, **characterized in that** the clips (12) are maintained by an adhesive (23) on a first face (17) of the panel (11) opposite a second face (18) of the panel (11) coming into contact with the cabinet (10) .

5. Motor vehicle openable section according to any one of Claims 1 to 4, **characterized in that** the clips (12) traverse the thickness of the panel (11) through corresponding apertures (24) provided in the panel (11), in which the clips (12) are mounted.

6. Motor vehicle openable section according to any one of Claims 1 to 5, **characterized in that** the tightening device (16) comprises a latch (19), particularly of the toggle type, secured to the cabinet (10) and allowing the coupling of a first end of the strap (15).

7. Motor vehicle openable section according to Claim 6, **characterized in that** the latch (19) comprises a base (191) fixed to the cabinet (10) and a lever (192) to which the first end of the strap (15) is coupled, the lever (192) varying angular positions by pivoting relative to the base (191) between different first and second angular positions.

8. Motor vehicle openable section according to Claim 7, **characterized in that** the base (191) comprises a first zone (Z1) for pivoting mounting of the lever (192), in which the angular variation of the lever (192) between the first and second angular positions ensures the variation of configurations of the tightening device (16) and a second zone (Z2) for pivoting mounting of the lever (192) distinct the from the first zone (Z1).

9. Motor vehicle openable section according to Claim 8, **characterized in that** when the lever (192) is mounted on the base (191) in the region of the second zone (Z2) for pivoting mounting, the angular variation of the lever (192) between the first and second angular positions ensures unlocking of the strap (15) relative to the clips (12).

10. Motor vehicle openable section according to any one of Claims 6 to 9, **characterized in that** it comprises elements (22) for attaching a second end of the strap (15) on the cabinet (10), particularly by screwing.

11. Motor vehicle comprising at least one openable section according to any one of the preceding claims, particularly constituting a front or rear, left or right, side door for a motor vehicle.

12. Method for assembling a motor vehicle openable section according to any one of Claims 1 to 10, particularly one such side door for a motor vehicle, comprising a step of reversible attachment of said at least one interchangeable external panel (11) on the external face of the structural support cabinet (10) comprising the following successive steps:
- a first step of placing the panel (11) on the cabinet (10) in the position to be maintained by the reversible attachment elements, during which the clips (12) traverse the cabinet (10) and project from the first face (13) of the cabinet (10),
- a second step, during which the strap (15) is slipped into the clips (12),
- a third step of actuating the tightening device (16) towards its first configuration, during which the strap (15) is tensioned by the tightening device (16) and pulls on the clips (12) such as to clamp the panel (11) on the cabinet (10).
